(19) Europäisches Patentamt
European Patent Office
Office européen des brevets

(11) Numéro de publication: **0 245 122 A2**

# (12) DEMANDE DE BREVET EUROPEEN

(21) Numéro de dépôt: **87400416.1**

(22) Date de dépôt: **25.02.87**

(51) Int. Cl.4: **C 01 F 11/00**
C 22 B 3/00

(30) Priorité: **28.02.86 FR 8602791**

(43) Date de publication de la demande: **11.11.87 Bulletin 87/46**

(84) Etats contractants désignés: **AT BE CH DE ES FR GB GR IT LI LU NL SE**

(71) Demandeur: **RHONE-POULENC CHIMIE**
**25, quai Paul Doumer**
**F-92408 Courbevoie Cédex (FR)**

(72) Inventeur: **Rollat, Alain**
**3bis rue Treich-Laplene**
**F-17000 - La Rochelle (FR)**

**Sabot, Jean-Louis**
**3, avenue Pascal**
**F-78600 - Maisons Laffitte (FR)**

(74) Mandataire: **Dubruc, Philippe et al**
**RHONE-POULENC INTERSERVICES Service Brevets Chimie 25, quai Paul-Doumer**
**F-92408 Courbevoie Cédex (FR)**

## (54) Procédé de purification d'un sel de baryum.

(57) La présente invention concerne un procédé de préparation de composés à base de baryum purifiés, notamment à faible teneur en strontium. Ce procédé est caractérisé en ce que l'on met en contact une solution aqueuse initiale de baryum avec un solvant organique comprenant au moins un agent extractant pratiquement insoluble dans l'eau est qui est :
- soit un acide carboxylique,
- soit un mono ester d'acide phosphonique,
- soit une hydroxy-8 quinoléine substituée,

ce par quoi l'on obtient, après séparation des phases, une solution aqueuse finale de baryum purifiée constituant la production, et une phase organique chargée en impuretés, notamment en strontium.

Ce procédé peut notamment être appliqué à la production de carbonate de baryum de haute pureté.

EP 0 245 122 A2

**Description**

PROCEDE DE PURIFICATION D'UN SEL DE BARYUM

La présente invention concerne un procédé de préparation de composés à base de baryum purifiés.

Elle concerne plus particulièrement un procédé de préparation d'un sel de baryum purifié, notamment à faible teneur en strontium. Ce procédé peut être notamment appliqué avantageusement à la production de carbonate de baryum d'un haut degré de pureté, celui-ci pouvant servir de précurseur d'un titanate de baryum de même pureté.

En effet, la demande en sels de baryum de haute pureté est croissante en raison par exemple, du développement important des condensateurs céramiques à base de titanate de baryum, ou des disques magnétiques à base d'hexaferrite de baryum.

Mais les minerais à base de baryum, qu'il s'agisse par exemple de sulfate comme dans la barytine ou de carbonate comme dans la withésite, contiennent de nombreuses impuretés, notamment du fer, du calcium, du sodium, et du strontium. D'autres impuretés, telles que le chlore ou le soufre, peuvent être introduites au cours des procédés classiques de fabrication du carbonate de baryum.

Or, si la plupart de ces impuretés accompagnant usuellement le baryum, peuvent être éliminées relativement facilement par des techniques classiques de précipitation/redissolution, l'élimination de traces de strontium reste encore un problème en raison de la grande similitude des propriétés chimiques de ces deux éléments.

On connaît certes des procédés de séparation du strontium et du baryum basés par exemple sur la chromatographie ou sur des échanges ioniques, mais il s'agit là plus de techniques de laboratoire permettant un dosage du strontium que de véritables procédés de séparation pouvant être exploités techniquement ou économiquement à l'échelle industrielle.

L'objet de la présente invention est donc de proposer un procédé industriel permettant de résoudre le problème de la séparation du strontium et du baryum, en vue d'obtenir des sels de baryum de haute pureté présentant notamment un rapport Sr/Ba d'au plus 200 ppm.

Dans ce but, la demanderesse a découvert qu'il était possible d'éliminer efficacement le strontium d'une solution aqueuse de baryum par mise en contact de cette solution avec un solvant organique comprenant au moins un agent extractant pratiquement insoluble dans l'eau, du type cationique ou cationique/chélatant et qui est :

- soit, un acide carboxylique de formule générale (1)

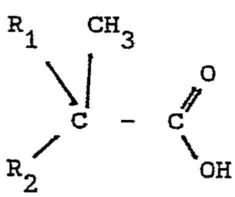

où $R_1$ et $R_2$ sont deux radicaux alkyles, linéaires ou ramifiés, substitués ou non, tels que la somme totale des atomes de carbone présents dans ces deux radicaux soit au moins égale à 6,

- soit, un mono ester d'acide phosphonique de formule générale (2) :

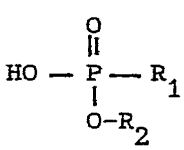

où $R_1$ et $R_2$ sont deux radicaux alkyles ou alcényles, linéaires ou ramifiés, mais non halogénés,

- soit, une hydroxy-8 quinoléine de formule générale (3) :

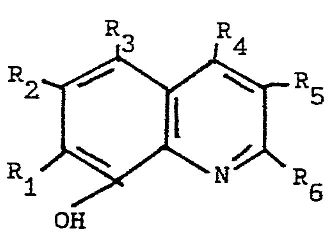

dans laquelle $R_1$, $R_2$, $R_3$, $R_4$, $R_5$ et $R_6$, identiques ou différents, sont choisis parmi l'hydrogène, les radicaux substitués ou non alkyles, alcényles, alicycliques, aromatiques ;

$R_1$, $R_2$, $R_3$, $R_4$, $R_5$ et $R_6$ ne pouvant représenter simultanément l'hydrogène,
ce par quoi on obtient, après séparation des phases, une solution aqueuse finale de baryum purifiée constituant la production, et une phase organique chargée en impuretés, notamment en strontium.

L'intérêt de ces solvants réside dans le fait qu'ils extraient préférentiellement le strontium, ce qui implique que les quantités de solvant à mettre en oeuvre restent limitées. Par ailleurs, et plus particulièrement dans le cas d'une hydroxy-8 quinoléine substituée, les facteurs de séparation strontium/baryum obtenus sont suffisamment élevés pour que le nombre d'étages nécessaires à une purification donnée soit faible.

D'autres caractéristiques et avantages de l'invention seront mieux compris à la lecture de la description qui va suivre et d'exemples concrets mais non limitatifs de mise en oeuvre du procédé.

En amont du procédé, la matière première utilisée peut être de la barytine, minerai à base de sulfate de baryum, que l'on réduit en sulfure BaS par réaction avec du coke. Le sulfure de baryum est ensuite traité de manière connue en soi de façon à obtenir un carbonate de baryum de qualité standard, c'est-à-dire présentant une teneur en strontium couramment comprise entre 1 et 5 % en poids par rapport à la teneur en baryum (Sr/Ba).

Bien sûr, sans sortir du cadre de la présente invention, tout autre produit de départ contenant du baryum peut être utilisé.

Le carbonate de baryum ainsi obtenu est ensuite traité par un acide, notamment de l'acide chlorhydrique ou de l'acide nitrique, ce par quoi l'on obtient respectivement une solution aqueuse de chlorure de baryum, ou une solution de nitrate de baryum. La teneur en strontium dans ces solutions est alors la même que celle précédemment citée. De telles solutions contiennent en outre des impuretés telles que notamment le sodium, le calcium, le fer, et le cas échéant du chlore et du soufre, dans des teneurs évidemment variables selon l'origine de la matière première utilisée, du procédé employé ou l'existence de pré-purifications antérieures en ces éléments.

C'est sur ces solutions, notamment de nitrate ou de chlorure de baryum, que peut être mis en oeuvre le procédé selon la présente invention. Toutefois, toute autre solution de sels de baryum solubles peut parfaitement convenir.

C'est ainsi qu'il s'est avéré particulièrement avantageux de travailler sur des solutions d'hydroxyde de baryum hydraté. En effet, d'une part ces solutions sont obtenues simplement par dissolution de l'hydroxyde solide dans l'eau, ce qui évite de procéder à une attaque acide d'un carbonate de baryum, et d'autre part, ces solutions sont telles que les conditions optimales de pH, telles que décrites ci-après, dans le milieu d'équilibre lors d'une extraction par un extractant de formule (3), sont automatiquement remplies.

Le degré d'hydratation de l'hydroxyde peut être variable, et notamment égal à 1,3 ou 8.

Selon un mode préférentiel de mise en oeuvre de l'invention, on travaillera avec une solution d'hydroxyde de baryum octohydrate, de formule $Ba(OH)_2,8H_2O$.

La solution aqueuse initiale de baryum à purifier est donc mise en contact avec un solvant organique.

Cette solution organique initiale comprend au moins un extractant du type mentionné plus haut, les extractants pouvant éventuellement être mélangés les uns avec les autres.

Ces extractants appartiennent à la famille des extractants du type cationique ou cationique/chélatant.

Dans le cadre des extractants répondant à la formule générale (1)

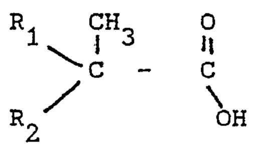

citée plus haut, les acides "Versatic" (marque déposée par la Société Shell Chemicals) conviennent particulièrement bien, et en particulier, l'acide "Versatic 911" (marque déposée par Shell chemicals) qui est un mélange d'acides mono-carboxyliques tertiaires saturés pour lesquels $R_1$ et $R_2$ sont des radicaux hydrocarbonés dont la somme totale des atomes de carbone des deux radicaux est égale à 6, 7 ou 8 et qui est fabriqué par synthèse oxo à partir d'oléfines en $C_9$-$C_{11}$ ; l'acide "Versatic 15/19" (marque déposée par Shell chemicals), dans lequel $R_1$ est un radical hexyle et $R_2$ un radical octyle ; l'acide "Versatic 10" (marque déposée par Shell Chemicals), dérivé du procédé Shell de carboxylation d'oléfines en $C_9$ et pour lequel $R_1$ et $R_2$ sont des radicaux hydrocarbonés dont la somme totale des atomes de carbone des deux radicaux est égale à 7.

Comme indiqué plus haut, on peut prendre aussi tous les composés de formule générale (2)

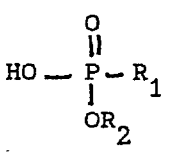

où $R_1$ et $R_2$ sont deux radicaux alkyles ou alcényles, linéaires ou ramifiés, mais dans tous les cas non halogénés. La demanderesse a en effet remarqué que dans le cas des dérivés halogénés, il n'y avait plus aucune sélectivité entre le strontium et le baryum à l'extraction. Le nombre total des atomes de carbone

présents dans les radicaux $R_1$ et $R_2$ doit toutefois être tel que l'extractant reste substantiellement insoluble dans l'eau.

On préfère toutefois opérer avec des composés dans lesquels $R_1$ et $R_2$ sont deux radicaux alkyles. Selon un autre mode préférentiel de mise en oeuvre de l'invention, l'extractant avantageusement utilisé sera l'acide (éthyl-2-hexyl) (éthyl-2-hexyl)phosphonique.

Enfin, concernant les extractants appartenant à la classe des hydroxy-8- quinoléines de formule générale (3)

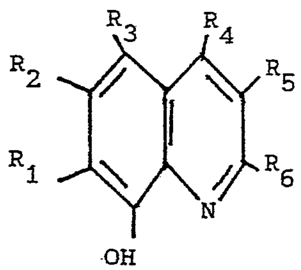

conviennent notamment :

- des α-alcényl hydroxy-8 quinoléines de formule :

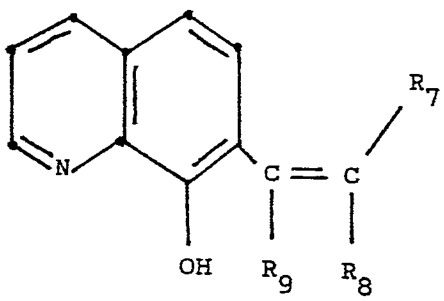

dans laquelle $R_7$, $R_8$, $R_9$ représentent un atome d'hydrogène ou un groupement hydrocarboné éventuellement substitué et notamment celles de formule :

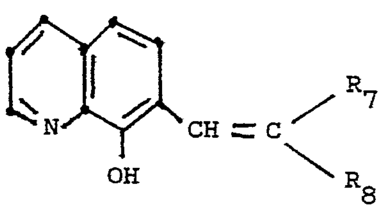

ou

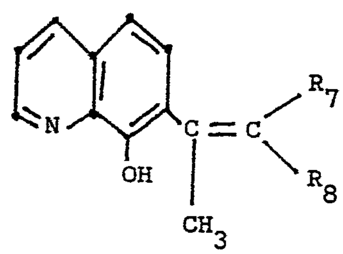

- des β-alcényl hydroxy-8 quinoléines de formule :

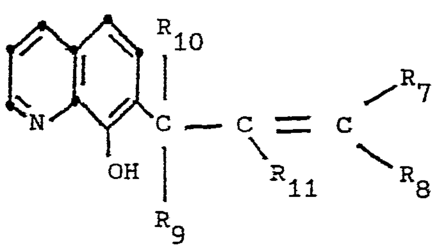

dans laquelle $R_7$, $R_8$, $R_9$, $R_{10}$, $R_{11}$ représentent un atome d'hydrogène ou un groupement hydrocarboné éventuellement substitué

- des alkyl hydroxy-8 quinoléines de formule :

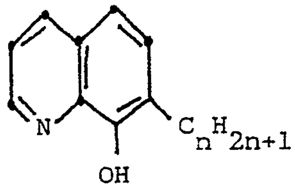

Il a été trouvé que les composés possédant des radicaux hydrogènes ou alkyles présentaient les meilleurs propriétés, et encore plus particulièrement lorsque le radical $R_1$ en position 7 est un radical alkyle dans lequel le nombre d'atomes de carbones est compris entre 5 et 25 et de préférence 8 et 15.

Dans un mode préférentiel, on utilise la undécyl-7- hydroxy- 8-quinoléine, et encore plus particulièrement la (méthyl-1 éthyl-4 octyl)-7-hydroxy-8 quinoléine.

Il est avantageux dans certains cas d'utiliser une phase organique qui comprend au moins un extractant du type précité en solution dans un diluant.

En effet, du fait de leurs propriétés physiques notamment, certains extractants ne peuvent pas être utilisés à l'état pur à l'extraction de la phase aqueuse initiale. Dans un tel cas, le diluant, outre son action solubilisante, a une action favorable sur les propriétés physiques du ou des extractants en diminuant par exemple la viscosité ou la densité de la phase organique.

A titre d'exemple, on pourra utiliser comme diluant, seul ou en mélange, des composés tels que des hydrocarbures aromatiques ou des hydrocarbures aliphatiques, saturés ou non. En particulier, le kérosène convient bien.

Les proportions diluant/extractant ne sont pas critiques. La concentration du ou des extractants dans le diluant peut être comprise entre 2 et 60 % en poids environ, par rapport à l'ensemble du solvant. Cette concentration est fonction notamment des propriétés physiques que l'on souhaite obtenir pour la phase organique intiale.

Dans le cas particulier où l'on utilise une hydroxy-8- quinoléine substituée, on peut être amené à ajouter au solvant organique un agent modificateur, afin d'éviter des problèmes de démixtion qui pourraient survenir lorsqu'on se trouve en milieu acide.

C'est ainsi qu'on pourra prendre des alcools à chaîne suffisamment longue pour qu'ils soient insolubles dans l'eau, par exemple du décanol. Les proportions en agent modificateur peuvent varier de 2 à 80 % en poids par rapport à l'ensemble du solvant, de préférence de 5 à 15 %.

La mise en contact entre la phase aqueuse initiale chargée en baryum et le solvant organique, ainsi que l'extraction se fait de manière connue dans un appareillage de type mélangeur-décanteur ou colonne par exemple.

Avantageusement, l'extraction est réalisée en continu. Elle peut se fair à co-courant ou de préférence à contre-courant. Il est bien sûr possible d'utiliser un ou plusieurs étages.

A ce sujet, il est important de noter que par le choix d'un nombre d'étages suffisant, on peut arriver à des purifications en strontium aussi élevées que désirées, c'est-à-dire avec des teneurs en en cet élément aussi faibles que de l'ordre de quelques ppm par rapport au baryum. Notamment dans le cadre des extractants de formule générale (3), une extraction à trois étages suffit pour descendre en-dessous des 200 ppm qui ont été fixés comme un maximum au début de la description.

La température à laquelle se fait la mise en contact n'est pas critique. En pratique, cette température ira de l'ambiante à 70°C.

Les rapports volumiques des phases sont déterminés de manière tout à fait classique par l'homme de l'art dans le cadre conventionnel des extractions liquide-liquide.

Il peut être avantageux, pour une bonne mise en oeuvre du procédé selon l'invention, d'introduire une base dans le milieu d'extraction de manière à vérifier dans le milieu d'équilibre les conditions de pH suivantes :

- dans le cas des extractants de formule générale (1), le pH devra être compris entre 5 et 9, et plus particulièrement entre 7 et 8, notamment pour l'acide "Versatic 10".
- dans le cas des extractants de formule générale (2), on travaillera avec un pH compris entre 2 et 6, plus particulièrement entre 4 et 5.
- enfin, pour des extractants de formule générale (3), on aura intérêt à travailler à des pH supérieurs à 10, plus particulièrement compris entre 11 et 13 lorsque l'on prend notamment l'undécyl 7-hydroxy-8 quinoléine, et encore plus précisément, lorsqu'il s'agit de la (méthyl-1-éthyl-4 octyl)-7-hydroxy-8-quinoléine. De telles conditions de pH pour de tels extractants favorisent la séparation baryum-strontium.

Pour ajuster le pH à de telles valeurs, toute base convenable sera utilisée lors de la mise en contact des solutions aqueuses et organiques. Toutefois, dans le cas de pH élevés, notamment supérieurs à 12, on pourra utiliser par exemple de la soude.

Selon un mode préférentiel de réalisation de l'invention, on obtiendra les conditions de basicité désirées par ajout de baryte, de formule $Ba(OH)_2$, $8H_2O$, ceci afin d'éviter un rajout d'impuretés notamment de sodium. Toujours dans ce même but, un autre mode préférentiel de réalisation de l'invention consistera à utiliser de l'ammoniaque.

Après mise en contact puis séparation des deux phases, on obtient d'une part, une solution aqueuse finale substantiellement purifiée, notamment en strontium, qui constitue la production et d'autre part, une phase

organique chargée en impuretés.

La phase organique précitée peut alors subir un lavage acide, notamment par l'acide nitrique, afin de récupérer l'éventuelle petite quantité de baryum extraite lors de l'étape précédente, puis une régénération par mise en contact avec une solution aqueuse acide, notamment nitrique ou chlorhydrique, et suivant des modalités similaires à celles décrites lors de la première étape d'extraction, ce par quoi l'on obtient, après séparation des phases, une phase aqueuse chargée notamment en strontium et une phase organique finale purifiée.

Selon un mode particulier de réalisation, ladite phase organique finale peut être réutilisée et recyclée à l'extraction des impuretés contenues dans la solution aqueuse initiale. Le système fonctionne ainsi en boucle fermée.

La solution aqueuse finale, constituant la production, peut éventuellement subir un traitement de purification supplémentaire, visant essentiellement à l'élimination du sodium. Dans le cas d'une solution de nitrate de baryum, ce tratement consiste en une cristallisation du sel de baryum par évaporation de la solution, ou bien en un ajout à ladite solution de nitrate de baryum d'une solution d'hydrogéno-carbonate d'ammonium, ce par quoi on obtient un précipité de carbonate de baryum de haute pureté.

Ce même traitement de carbonatation peut bien sûr être également appliqué sur des solutions de chlorure de baryum ou de baryte de manière à obtenir là encore des carbonates de baryum de haute pureté.

Ce nitrate ou ce carbonate trouve alors de nombreuses applications, notamment dans la fabrication de titanate de baryum de haute pureté.

Des exemples concrets de mise en oeuvre de l'invention vont maintenant être donnés.

Exemple 1 :

Du carbonate de baryum, introduit sous un débit de 68,7 Kg/h est attaqué par un acide nitrique 0,61 N sous un débit de 1141 l/h.

On obtient une solution de nitrate de baryum $Ba(NO_3)_2$ à 80 g/l présentant des taux d'impuretés reportés dans le tableau ci-dessous et exprimés en % en poids ou en ppm par rapport au baryum :

| Sr | Na | Ca | Fe | Cl |
|---|---|---|---|---|
| 2,44 % | 0,33 % | 532 ppm | 70 ppm | 172 ppm |

Cette solution est introduite sous un débit de 1137 l/h dans une batterie de mélangeurs-décanteurs, l'extraction se faisant en continu et à contre courant sur quatre étages d'extraction avec un solvant organique comprenant de l'undécyl-7- hydroxy-8- quinoléine commercialisée sous le nom de marque KELEX 100 (marque déposée par la société SHEREX CHEMICAL) de concentration 0,9 Mole/litre, un agent modificateur, qui est du décanol à raison de 10 % en poids par rapport au solvant, le tout dilué dans du kérosène et introduit sous un débit de 2850 l/h.

Simultanément, il est introduit à l'étage d'alimentation de la solution de nitrate pour ajuster le pH, une solution de baryte à 80 g/l avec un débit de 1125 l/h.

Cette solution de baryte présente les impuretés suivantes, exprimées en poids par rapport au baryum :

| Sr | Na | Ca | Fe | Cl |
|---|---|---|---|---|
| 2,43 % | 0,20 % | 110 ppm | 55 ppm | 2850 ppm |

Après séparation des phases, on obtient une solution aqueuse de nitrate de baryum à 56 g/l sous un débit de 2936 l/h, substantiellement purifiée et qui présente les taux d'impuretés suivants exprimés en poids par rapport au baryum.

| Sr | Na | Ca | Fe | Cl |
|---|---|---|---|---|
| <50 ppm | 0,27 % | <10ppm | <10ppm | 1500 ppm |

La phase organique chargée en impuretés est lavée dans un étage supplémentaire de la batterie par un acide nitrique 0,6 N sous un débit de 670 l/h puis régénérée dans un autre étage supplémentaire lors de la réextraction des impuretés par un acide nitrique 0,6 N introduit avec un débit de 105 l/h, ce par quoi, on obtient un solvant organique purifié, pouvant être utilisé à l'étape d'extraction des impuretés, notamment strontium, de la phase aqueuse initiale, et une phase aqueuse chargée d'impuretés, concentrée à 70 % en strontium.

Exemple 2 :

Une solution d'alimentation $BaCl_2$ à 290 g/l, présentant un taux de strontium de 2 % en poids par rapport au baryum est introduite en continu et à contre courant dans une batterie d'extraction à trois étages sous un débit de 55,5 l/h. Le solvant organique est constitué d'undécyl-7- hydroxy 8 quinoléine (KELEX 100) à 0,9 Mole/litre et à raison de 30 % en poids, d'un agent modificateur qui est du décanol à raison de 10 % en poids, le tout mélangé à du kérosène.

Le solvant organique est introduit avec un débit de 67,7 l/h.

On introduit simultanément une solution de soude 10N avec un débit de 5,4 l/h à l'étage d'alimentation en chlorure de baryum.

On obtient, après séparation des phases, une solution aqueuse de chlorure de baryum à 205 g/l présentant un taux de strontium inférieur à 180 ppm par rapport au baryum (Sr/Ba).

La phase organique chargée en impuretés est régénérée par mise en contact en continu et à contre courant avec un acide chlorydrique 3,4 N introduit avec un débit de 12 l/h.

Exemple 3

Une solution d'alimentation $BaCl_2$ à 300 g/l, présentant un taux de strontium de 2 % en poids par rapport au baryum est introduite en continu et à contre courant à l'étage No 10 d'une batterie d'extraction de 12 étages sous un débit de 54 l/h. Le solvant organique est constitué d'acide (éthyl-2 hexyl)(éthyl-2 hexyl) phosphonique à 1 M/l dans du kérosène. Le solvant organique est introduit à l'étage No 1 avec un débit de 620 l/h.

Au même étage, on introduit une solution d'ammoniaque 10N de façon à maintenir le pH de la phase aqueuse égal à 4.

Enfin, on introduit à l'étage No 12 une solution de lavage d'acide chlorhydrique à une concentration de 2,9 N et à un débit de 54 l/h.

On récupère à l'étage No 1 une solution aqueuse de baryum ne contenant plus que 195 ppm de strontium par rapport au baryum (Sr/Ba).

La phase organique chargée en impuretés est régénérée à contre courant dans une batterie d'extraction de 2 étages par de l'acide chlorhydrique 2,9 N sous un débit de 11,8 l/h. La phase organique peut alors être recyclée à l'étage No 1 de la batterie d'extraction.

Exemple 4

Une solution d'alimentation $BaCl_2$ à 300 g/l présentant un taux de strontium de 2 % en poids par rapport au baryum est introduite en continu et à contre courant dans une batterie d'extraction de 15 étages à l'étage No 13 sous un débit de 54 l/h. Le solvant organique est constitué d'acide "Versatic 10" (marque déposée par SHELL CHEMICALS) à 1 M/L dans du kérosène. Le solvant organique est introduit à l'étage No 1 avec un débit de 620 l/h. Au même étage, on introduit une solution d'ammoniaque 10N de façon à maintenir le pH de la phase aqueuse égal à 7.

Enfin, on introduit à l'étage No 15 une solution de lavage d'HCl 2,9N sous un débit de 67,5 l/h.

On récupère à l'étage No 1 une solution aqueuse de baryum ne contenant plus que 190 ppm de strontium par rapport au baryum (Sr/Ba).

La phase organique chargée en impuretés est régénérée à contre courant dans une batterie d'extraction de 2 étages par de l'acide chlorhydrique 2,9 N sous un débit de 23 l/h. La phase organique peut alors être recyclée à l'étage No 1 de la batterie d'extraction.

Exemple 5

De la baryte octohydratée, introduite sous un débit de 17,2 kg/h, est dissoute par de l'eau à 20°C sous un débit de 2860 l/h.

On obtient une solution de baryte à 60 g/l présentant des taux d'impuretés reportées dans le tableau ci-dessous et exprimés en % en poids ou en ppm par rapport au baryum.

| Sr | Na | Ca | Fe | Cl |
|---|---|---|---|---|
| 1,92 % | 0,27 % | 0,18 % | 140 ppm | 0,39 % |

Cette solution est introduite sous un débit de 2860 l/h dans une batterie de mélangeurs-décanteurs, l'extraction se faisant en continu et à contre-courant sur 14 étages d'extraction avec un solvant organique d'undécyl-7-hydroxy-8 quinoléine commercialisé sous le nom de marque KELEX 100 (marque déposée par la société SHEREX CHEMICAL) de concentration 0,22 Mole/litre, dilué dans du kérosène, et introduit sous un débit de 3177 l/h.

Après séparation des phases, on obtient une solution aqueuse de baryte à 48,6 g/l substantiellement purifiée et qui présente les taux d'impuretés suivants exprimés en poids par rapport au baryum.

| Sr | Na | Ca | Fe | Cl |
|---|---|---|---|---|
| <50 ppm | 0,34 % | <10ppm | <10 ppm | 0,5 % |

La phase organique chargée en impuretés est régénérée dans un étage supplémentaire de la batterie par de l'acide chlorhydrique 1,45N sous un débit de 144 l/h, ce par quoi on détient un solvant organique purifié, pouvant être utilisé à l'étape d'extraction des impuretés, notamment strontium, de la phase aqueuse initiale, et une phase aqueuse chargée d'impuretés, aisément recyclable sur un atelier traditionnel de carbonate de baryum.

Bien entendu, l'invention n'est nullement limitée aux modes de réalisation décrits qui n'ont été donnés qu'à

titre d'exemples. En particulier, elle comprend tous les moyens constituant des équivalents techniques des moyens décrits ainsi que leurs combinaisons si celles-ci sont mises en oeuvre dans le cadre de la protection comme revendiquée.

**Revendications**

1. Procédé de préparation d'un sel de baryum purifié, notamment à faible teneur en strontium, caractérisé en ce que l'on met en contact une solution aqueuse initiale de baryum avec un solvant organique comprenant au moins un agent extractant pratiquement insoluble dans l'eau, et qui est :
- soit, un acide carboxylique de formule générale (1)

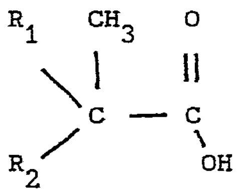

où $R_1$ et $R_2$ sont deux radicaux alkyles, linéaires ou ramifiés, substitués ou non, tels que la somme totale des atomes de carbone présents dans ces deux radicaux soit au moins égale à 6,
- soit, un mono ester d'acide phosphonique de formule générale (2) :

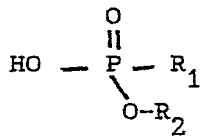

où $R_1$ et $R_2$ sont deux radicaux alkyles ou alcényles, linéaires ou ramifiés, mais non halogénés,
- soit, une hydroxy-8 quinoléine de formule générale (3) :

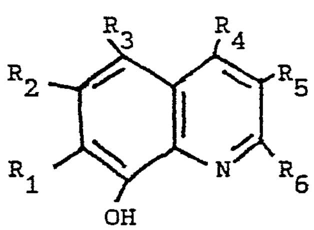

dans laquelle $R_1$, $R_2$, $R_3$, $R_4$, $R_5$ et $R_6$, identiques ou différents, sont choisis parmi l'hydrogène, les radicaux substitués ou non alkyles, alcényles, alicycliques, aromatiques ;
$R_1$, $R_2$, $R_3$, $R_4$, $R_5$ et $R_6$ ne pouvant représenter simultanément l'hydrogène,
ce par quoi on obtient, après séparation des phases, une solution aqueuse finale de baryum purifiée constituant la production, et une phase organique chargée en impuretés, notamment en strontium.

2. Procédé selon la revendication 1 caractérisé en ce que le solvant organique contient au moins un agent extractant de formule générale (2) dans laquelle les radicaux $R_1$ et $R_2$ sont des radicaux alkyles.

3. Procédé selon la revendication 2 caractérisé en ce que le solvant organique comprend au moins comme agent extractant l'acide (éthyl-2- hexyl) (éthyl-2- hexyl) phosphonique.

4. Procédé selon la revendication 1 caractérisé en ce que le solvant organique contient au moins un agent extractant de formule générale (3) dans laquelle les radicaux $R_1$, $R_2$, $R_3$, $R_4$, $R_5$ et $R_6$ sont choisis dans le groupe des hydrogènes ou des alkyles.

5. Procédé selon la revendication 4 caractérisé en ce que le radical $R_1$ est un radical alkyle.

6. Procédé selon la revendication 5 caractérisé en ce que le solvant organique comprend au moins comme agent extractant l'undécyl-7- hydroxy-8- quinoléine, et en particulier la (méthyl-1- éthyl-4-octyl)-7 hydroxy-8 quinoléine.

7. Procédé selon l'une quelconque des revendications précédentes caractérisé en ce que le solvant organique comprend en outre au moins un diluant.

8. Procédé selon la revendication 7 caractérisé en ce que le diluant est un hydrocarbure aliphatique, saturé ou insaturé, et/ou un hydrocarbure aromatique.

9. Procédé selon la revendication 8 caractérisé en ce que le diluant est du kérosène.

10. Procédé selon l'une quelconque des revendications précédentes caractérisé en ce que le solvant organique comprend en outre au moins un agent modificateur.

11. Procédé selon la revendication 10 caractérisé en ce que l'agent modificateur est un alcool pratiquement insoluble dans l'eau, notamment le décanol.

12. Procédé selon l'une des revendications 1 ou 7 à 11 caractérisé en ce que l'on utilise au moins un agent extractant de formule générale (1) et que l'on introduit dans le milieu d'extraction une base de manière à ce que le pH dans le milieu d'équilibre soit compris entre 5 et 9, de préférence 7 et 8.

13. Procédé selon l'une des revendications 1 à 3 ou 7 à 11 caractérisé en ce que l'on utilise au moins un agent extractant de formule générale (2) et que l'on introduit dans le milieu d'extraction une base de manière à ce que le pH dans le miliieu d'équilibre soit compris entre 2 et 6, plus particulièrement entre 4 et 5.

14. Procédé selon l'une des revendications 1 ou 4 à 11 caractérisé en ce que l'on utilise au moins un agent extractant de formule générale (3) et que l'on introduit dans le milieu d'extraction une base de manière à ce que le pH dans le milieu d'équilibre soit supérieur à 10, de préférence compris entre 11 et 13.

15. Procédé selon l'une quelconque des revendications 12, 13 et 14, caractérisé en ce que l'on obtient les conditions de pH précitées, par addition de baryte et/ou d'ammoniaque et/ou de soude lors de la mise en contact de la phase aqueuse initiale et de la phase organique.

16. Procédé selon l'une quelconque des revendications précédentes caractérisé en ce que l'on met en contact la solution aqueuse initiale de baryum et le solvant organique en continu et soit, à co-courant soit, de préférence à contre-courant.

17. Procédé selon l'une quelconque des revendications précédentes caractérisé en ce que l'on met en contact la phase organique chargée en impuretés précitée avec une solution aqueuse acide, notamment d'acide chlorydrique ou d'acide nitrique, ce par quoi on obtient, après séparation des phases, une phase organique finale purifiée et une phase aqueuse chargée notamment en strontium.

18. Procédé selon la revendication 17 caractérisé en ce que la phase organique finale purifiée est recyclée pour être mise en contact avec la solution aqueuse initiale de baryum.

19. Procédé selon l'une quelconque des revendications précédentes caractérisé en ce que la solution aqueuse initiale de baryum à purifier est une solution de nitrate de baryum.

20. Procédé selon la revendication 19 caractérisé en ce que l'on procède à une cristallisation du nitrate de baryum présent dans la solution aqueuse finale de baryum purifiée.

21. Procédé selon l'une quelconque des revendications 1 à 18 caractérisé en ce que la solution aqueuse initiale de baryum à purifier est une solution de chlorure de baryum.

22. Procédé selon l'une quelconque des revendications 1 à 18 caractérisé en ce que la solution aqueuse initiale de baryum à purifier est une solution d'hydroxyde de baryum hydraté.

23. Procédé selon la revendication 22 caractérisé en ce que l'on utilise une solution d'hydroxyde de baryum octohydrate.

24. Procédé selon l'une quelconque des revendications 1 à 19 et 21 à 23 caractérisé en ce que l'on ajoute à la solution aqueuse finale de baryum purifié une solution d'hydrogèno-carbonate d'ammonium, ce par quoi l'on obtient un précipité de carbonate de baryum purifié, notamment en strontium.